# EUROPEAN PATENT SPECIFICATION

(11) **EP 3 027 480 B1**
(45) Date of publication and mention of the grant of the patent: **20.05.2020**
(21) Application number: 14745133.0
(22) Date of filing: 30.07.2014
(51) Int. Cl.: B60W 50/14, B60W 50/16, B60W 50/00

(54) **VEHICLE DISTRIBUTED NETWORK**
FAHRZEUGVERTEILTES NETZWERK
RÉSEAU DISTRIBUÉ DE VÉHICULE

(30) Priority: 30.07.2013 GB 201313626
(43) Date of publication of application: 08.06.2016
(73) Proprietor: Jaguar Land Rover Limited, Coventry, Warwickshire CV3 4LF (GB)
(72) Inventor: HALFORD, Simon, Coventry Warwickshire CV3 4LF (GB); BARKER, Karl, Coventry Warwickshire CV3 4LF (GB)
(74) Representative: Holmes, Matthew William
(86) International application number: PCT/EP2014/066419
(87) International publication number: WO 2015/014905

(56) References cited:
- EP-A1- 2 615 779
- EP-A2- 1 033 691
- WO-A1-2012/110020
- WO-A1-2012/167343
- DE-A1-102005 001 973
- DE-A1-102010 045 154
- US-A1- 2004 083 043
- US-A1- 2007 067 085
- US-A1- 2010 097 202

## Description

### TECHNICAL FIELD

The present disclosure relates to a vehicle distributed network subsystem for providing feedback to a user. In particular, but not exclusively, aspects of the present invention relate to a vehicle distributed network subsystem for providing feedback to an occupant of the vehicle, such as a driver or a passenger. Aspects of the invention also relate to a vehicle driver information system; a vehicle wade sensing system; a vehicle eco-driving system; a vehicle lane departure system; a vehicle distributed network system; a vehicle; a method; and a distributed computer program product.

### BACKGROUND OF THE INVENTION

Modern vehicles can be equipped with multiple internal displays for providing information to the driver. Various parameters can be displayed on each display, for example instantaneous vehicle speed and fuel consumption. There is a requirement to display a parameter simultaneously on different displays. Telematics allows said parameters to be additionally simultaneously displayed, for example, on one or more smartphone displays.

Typically, the displayed parameter depends on vehicle usage and/or external conditions, and is therefore subject to variation in time. Raw data are collected by one or more vehicle sensors and are then processed by a vehicle system. Typically, the vehicle system is configured to dynamically compute the to-be-displayed parameter. The results of such computations are transmitted to the displays and thus outputted to the driver.

Modern vehicles typically comprise distributed networks having a plurality of interconnected electronic control units/modules (ECUs). Each ECU is configured to perform certain functions and may incorporate a number of sensors and/or actuators. Examples of ECUs are: the engine control module (ECM); the transmission control module (TCM); the audio control module (ACM); the body control module (BCM); the anti-lock braking control module (ABS); the cruise control module (CCM); the electric power steering control module (EPSCM); and the sun roof control module (SCM). Each ECU comprises one or more network interfaces and at least one processor or other signal processing/conditioning device (such as a filter, or a gate). Modern systems can incorporate tens of ECUs, or even one hundred or more ECUs.

It is possible to identify network subsystems. Each network subsystem comprises a group or cluster of ECUs which collaborate over the network infrastructure to deliver a higher level functionality. Thus the displays may be part of a driver information subsystem and may be part of different ECUs. Accordingly, if the first and second displays are required to simultaneously output a given parameter, there is a risk that the outputted values might be discrepant. This can happen for essentially three reasons: because the outputted values have been calculated by different ECUs; because the calculations have been performed on different sets of source data/signals; or because there is a varying latency between the first and the second display. Any such discrepancy may affect user confidence in the displayed information.

US patent 6,505,100 discloses a distributed vehicle information processing and vehicle control system having a first subsystem located onboard of the vehicle and a second subsystem, located at a separate location, in communication with the first subsystem by means of a data transmission network. The architecture of the distributed vehicle information processing and vehicle control system is formed completely from components which follow a standard architecture specification for joining them together to form the overall system. The document discloses information being provided to the driver only via a voice output while driving, or only via a visual display when the vehicle is stationary, in order to reduce distraction.

It is against this background that the present invention has been conceived. At least in certain embodiments, the present invention seeks to reduce the risk of, or to prevent, a vehicle occupant being subjected to discrepant or contrasting information received simultaneously from different human-to-machine terminals (also known as human-to-machine interfaces). At least in certain embodiments, the present invention seeks to address shortcomings associated with the prior art or to improve parts, apparatus, systems and methods disclosed in the prior art.

For further information relating to distributed vehicle information processing, the reader is directed to European patent publication number EP1033691.

### SUMMARY OF THE INVENTION

Aspects of the present invention relate to a vehicle distributed network subsystem for providing feedback to a user; to a vehicle driver information system; to a vehicle wade sensing system; to a vehicle eco-driving system; to a vehicle lane departure warning system; to a vehicle distributed network; to a vehicle; to a method; and to a distributed computer program product.

According to an aspect of the invention, there is provided a vehicle distributed network subsystem for providing feedback to a user, the subsystem comprising:
a plurality of electronic control units (ECUs); and
a data transmission means over which said ECUs are configured to communicate with one another, the data transmission means being configured to receive data relating to at least one parameter from at least one data source;
wherein the subsystem is configured to define a nominated ECU for generating processed data from the data received by said data transmission means, and
wherein the subsystem is configured to broadcast said processed data to two or more terminals for providing feedback to the user, to cause communication of the same parameter to the user by the different terminals.

The processed data can be broadcast over the same or a different data transmission means.

The subsystem comprises two or more terminals. The two or more terminals are configured to communicate with said ECUs over the data transmission means.

Each of said ECUs can have at least one associated processor or other signal/data conditioning device (e.g. a filter, or a gate). Some ECUs may have a signal/data conditioning device in addition to a processor.

It will be appreciated that the terms signal and data are used herein interchangeably. The term message can also be used instead of signal or data.

With a subsystem architecture according to an aspect of the invention, the possibility that values of a same parameter communicated directly or indirectly to the user by means of different terminals be different is reduced, minimised or eliminated.

One or more terminals can be configured to present, or otherwise communicate, said values directly to the user according to a predetermined numeric format. Examples of suitable terminals are displays or loudspeakers. One or more terminals can be configured to communicate said values indirectly, for example by transforming said values into warning events such as a visual alarm (e.g. a flashing red light), an aural alarm (e.g. a buzzing sound) or a haptic feedback (e.g. vibration of the steering wheel).

Furthermore, with a subsystem architecture in accordance with the invention, a certain calculation is prevented from being performed redundantly in the system, i.e. is prevented from being performed multiple times by different processors belonging to different ECUs. The calculation is performed only by a single, nominated ECU. Since any requirements to perform the calculation multiple times are avoided, the subsystem architecture is computationally efficient as computational resources are freed up for other applications or the computational energy consumption is reduced. Furthermore, should the calculation algorithm need to be changed, it will be necessary to reprogram or update with a new software only one ECU. Further still, any calibration file differences between different vehicle distributed networks serving different vehicles need only exist in a single ECU.

The data transmission means can comprise one or more data transmission bus. For example, the data transmission means can comprise a controller area network (CAN) bus. However, other bus types are possible such as local interconnect network (LIN) bus, media oriented systems transport (MOST) bus, Ethernet bus, Broad Reach bus or Flexray bus. The data transmission means can comprise a wi-fi data transmission network (WLAN), or a Bluetooth data transmission network. The data transmission means could comprise a SAE J1939 bus.

In some embodiments, the subsystem can be configured to deliver said processed data to each of said terminals for simultaneous or at least substantially simultaneous output to the user. The user may have an even greater expectation that the values presented by the system be substantially similar or equal, or that any corresponding warning events be triggered simultaneously. In some embodiments, different terminals and/or ECUs can be programmed to associate different data latencies to the processed data. Each of the data latencies can be below a predetermined value. Said predetermined value can be, for example, 200ms, or 100ms. Two or more of said data latencies can be equivalent, or, to use a different term, aligned.

In some embodiments, the terminals can be configured to output feedback to a vehicle occupant, such as a driver or a passenger. In some embodiments, the terminals can be configured to output feedback to the driver of the vehicle. In other embodiments, the terminals can be one or more remote terminals, such as smartphones or smartphone displays. In some embodiments, the remote terminals can be configured to output feedback to a remote user and/or configured to communicate with one or more telemetry units installed in the vehicle. It will be understood that "remote user" means a user remote from the vehicle.

In some embodiments, the data transmission means can be configured to receive data relating to an operating parameter of the vehicle such as vehicle speed. In other embodiments, the data transmission means can be configured to receive data relating to external vehicle conditions, such as external temperature. Some of these data can be supplied to the data transmission means by another, separate vehicle distributed network subsystem present on the vehicle, or directly by means of one or more sensors installed in the vehicle.

In some embodiments, each of said terminals can be part of a respective user interface ECU - here the wording user interface ECU is used to denote an ECU which comprises at least one terminal for human-to-machine interfacing. A first of these ECUs can subscribe to a second of these ECUs. Such a subscription can be configured such that messages exchanged between said ECUs have minimal latency, i.e. high priority. Otherwise, a first and a second of these ECUs can each subscribe to a third ECU. Said third ECU can be the nominated ECU. Several processors configured to process data in parallel can be provided in the nominated ECU, or a single processor or other data conditioning device such as a filter, or a gate, can be provided in the nominated ECU. It will be understood that the wording "processed data" as used herein can also encompass filtered and/or gated data.

According to another aspect of the invention, there is provided a vehicle driver information system comprising a vehicle distributed network subsystem as described herein, wherein the data transmission means is configured to receive data from at least one of the following:
a powertrain control module (PCM);
a cruise control module (CCM);
a transmission control module (TCM);
a transfer case control module (TCCM);
an antilock braking system module (ABS); or
a parking aid module (PAM),
wherein an instrument panel cluster (IPC) ECU is configured to function as the nominated ECU, and wherein each of the terminals is a display. The vehicle driver information system can be configured to provide data relating to vehicle or engine speed, instantaneous fuel consumption etc.

One of the displays could be the display of the IPC ECU (the IPC ECU is responsible for the provision of information to the driver on a screen located on the main vehicle instrumentation board). One of the displays could be part of a head-up display (HUD) ECU (the HUD ECU is responsible for the provision of information to the driver on a screen located at a location visible by the driver as the driver looks at the road).

In some embodiments, the data transmission means is configured to receive data relating to vehicle or engine speed, the nominated ECU is configured to generate processed data relating to vehicle or engine speed, and the displays are each configured to visualise said processed data.

According to another aspect of the invention, there is provided a vehicle wade sensing system comprising a vehicle distributed network subsystem as described herein and comprising a further data transmission means and a gateway ECU for distributing data between the data transmission means, wherein at least one of said means is configured to receive data from at least one of the following:
an anti-lock braking system (ABS) ECU;
a parking aid module (PAMB);
a forward or rearward park assist sensor;
a water presence sensor;
a water depth sensor; or
a chassis control module (CHCM);
wherein the PAMB is configured to function as the nominated ECU, and
wherein each of the terminals is a display.

The parking aid module can comprise downward sensors for detecting water presence and/or water level.

One of the displays could be part of an instrument panel cluster ECU (IPC ECU). Another of the displays could be part of a front control display interface module ECU (FCDIM ECU) (an FCDIM ECU is responsible for the display of information on a touch screen located on the dashboard of the vehicle).

In some embodiments, at least one of the means is configured to receive data relating to the level of water surrounding the vehicle, the nominated ECU is configured to generate processed data relating to said water level, and the displays are each configured to visualise said processed data.

According to another aspect, the invention provides a vehicle eco-driving system comprising a vehicle distributed network subsystem as described herein and comprising a further data transmission means and a gateway module (GWM) ECU for distributing data between the data transmission means;
wherein at least one of said means is configured to receive data relating to fuel consumption, wherein an instrument panel cluster (IPC) ECU is configured to function as the nominated ECU, and wherein each of the terminals is a display.

One of the displays could be part of the IPC ECU. Another of the displays could be part of a front control display interface module ECU (FCDIM ECU). Another of the displays could be part of a smartphone or of a remote computer. Other human-to-machine interfaces can be used on onboard or remote devices, such as a haptic feedback means.

In some embodiments, the nominated ECU is configured to generate processed data relating to fuel consumption, and the displays are each configured to visualise a signal for encouraging eco driving based on said processed data.

According to a further aspect of the invention, there is provided a vehicle lane departure warning system comprising a vehicle distributed network subsystem as described herein and comprising a further data transmission means and a gateway module (GWM) ECU for distributing data between the data transmission means, wherein at least one of said data transmission means is configured to receive data relating to relative positioning of the vehicle in a lane, wherein the GWM ECU is configured to function as the nominated ECU, and wherein at least one of the terminals is a display.

The display could be part of an instrument panel cluster (IPC) ECU. At least one of the terminals could be a haptic feedback terminal for providing haptic feedback to a vehicle driver. In some embodiments, the haptic feedback terminal is part of a power steering control module (PSCM) ECU.

In some embodiments, at least one of said data transmission means is configured to receive data from a vehicle camera.

According to yet a further aspect of the invention, there is provided a vehicle distributed network comprising a vehicle distributed network subsystem as described herein, and/or a vehicle driver information system as described herein, and/or a vehicle wade sensing system as described herein, and/or a vehicle eco driving system as described herein, and/or a vehicle lane departure warning system as described herein.

According to yet a further aspect of the invention, there is provided a vehicle comprising a vehicle distributed network as described herein.

According to yet a further aspect of the invention, there is provided a method of providing feedback to a user of a vehicle via a plurality of terminals connected to a vehicle distributed network, the method comprising:
supplying data relating to at least one parameter to a data transmission means connected to a plurality of electronic control units (ECUs), wherein the plurality of electronic control units are configured to communicate with one another via the data transmission means;
processing said data by means of a nominated ECU in order to generate a set of processed data; and
broadcasting and delivering the processed data to two or more of said terminals for output to the user, to cause communication of the same parameter to the user by the different terminals.

According to yet a further aspect of the invention, there is provided a distributed computer program product for configuring a vehicle distributed network, the distributed computer program product comprising a computer readable storage medium including computer readable program code, where the computer readable program code when executed on a vehicle system comprising a vehicle distributed network having a plurality of terminals for human-to-machine interfacing configures the vehicle distributed network such that a vehicle distributed network subsystem and/or a vehicle driver information system and /or a vehicle wade sensing system and/or a vehicle eco-driving system and/or a vehicle lane departure warning system and/or a vehicle as described herein can be identified.

According to yet a further aspect of the invention, there is provided a distributed computer program product comprising a computer readable storage medium including computer readable program code, where the computer readable program code when executed on a vehicle system comprising a vehicle distributed network having a plurality of terminals for human-to-machine interfacing configures the vehicle distributed network for performing the method(s) described herein.

The nominated ECU can be selected based on one or more criterion. In some embodiments, the nominated ECU is the ECU having the largest and/or fastest processing capability. In some embodiments, the nominated ECU is an ECU having spare processing capability. In some embodiments, the nominated ECU is nominated based on direct accessibility by the terminals over a common data transmission means. Alternatively, the nominated ECU can be accessed indirectly by the terminals, i.e. the nominated ECU can be accessed from different and/or separate data transmission means, each communicating directly with one of the terminals.

### BRIEF DESCRIPTION OF THE DRAWINGS

An embodiment of the present invention will now be described, by way of example only, with reference to the accompanying figures, in which:
Figure 1 contains explanatory notes for interpreting Figures 2, 3 and 4;
Figure 2 is a system architecture diagram according to the prior art showing a driver information subsystem for outputting information to the driver on two displays;
Figure 3 is a system architecture diagram showing a driver information system according to an embodiment of the present invention;
Figure 4 is a system architecture diagram showing a wade sensing system according to another embodiment of the present invention;
Figure 5 is a system architecture topology diagram showing an eco-driving system according to another embodiment of the present invention;
Figure 6 is a system architecture topology diagram representing schematically the data flow between certain ECUs of the subsystem of Figure 5;
Figure 7 is a system architecture topology diagram equivalent to that shown in Figure 5, with the data flow represented in an alternative manner compared to Figure 6;
Figure 8 is a system architecture topology diagram representing a system architecture in accordance with another embodiment of the present invention, showing the data flow between certain ECUs;
Figure 9 is a system architecture topology diagram equivalent to that shown in Figure 8, with the data flow represented in an alternative manner compared to that of Figure 8;
Figure 10 is a system architecture topology diagram representing schematically the data flow between certain ECUs forming part of a lane departure warning system in accordance with another embodiment of the invention;
Figure 11 is a system architecture topology diagram representing schematically the data flow between certain ECUs forming part of a lane departure warning system in accordance with another embodiment of the present invention;
Figure 12 is a system architecture topology diagram representing schematically the data flow between certain ECUs forming part of a lane departure warning system which is in accordance with another embodiment of present invention; and
Figure 13 is a system architecture topology diagram representing schematically the data flow between certain ECUs forming part of a lane departure warning system in accordance with another embodiment of the present invention.

### DETAILED DESCRIPTION OF AN EMBODIMENT

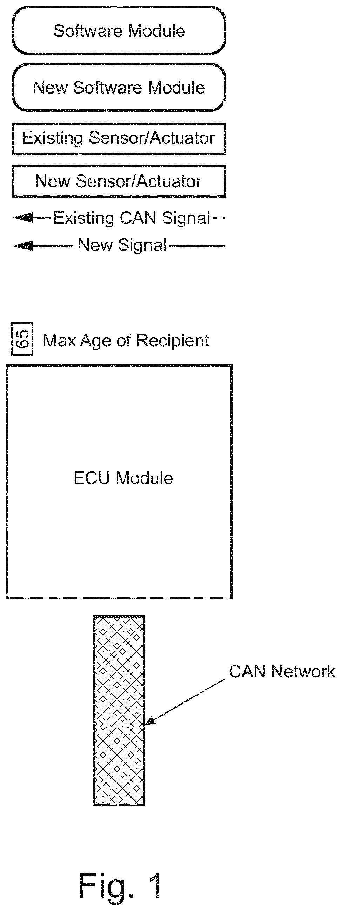

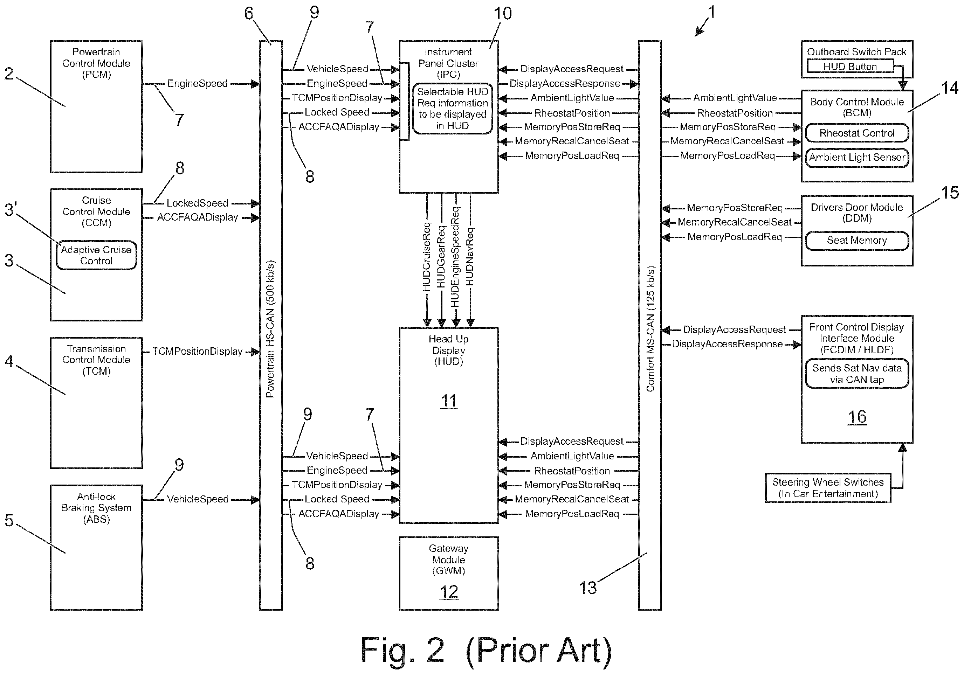

Figure 1 provides explanatory notes for the interpretation of Figures 2, 3 and 4: horizontal boxes with rounded corners represent software modules; horizontal shade-filled boxes with right angle corners represent sensors or actuators; arrows represent signals/data published by the various electronic control units (ECUs) on the network, or supplied by the network to the various ECUs; small vertical boxes represent values related to signal latencies imposed by a network interface of an ECU; large boxes with right angle corners represent ECUs and elongated shade-filled vertical boxes represent data transmission network buses.

Figure 2 shows schematically a driver information subsystem 1 according to a network architecture which allows simultaneous display to the driver of selected vehicle operating parameters on two displays. This network architecture is not an embodiment of the invention, and is herein described purely to help the skilled person to appreciate the features of the invention, which will be introduced later.

The subsystem 1 comprises: a powertrain control module (PCM) 2; a cruise control module (CCM) 3; a transmission control module (TCM) 4; and an anti-lock braking system (ABS) 5. The PCM 2, CCM 3, TCM 4 and ABS 5 are connected to a powertrain high speed controller area network (PT-CAN) bus 6. The PCM 2 is configured to publish an engine speed signal 7 on the PT-CAN bus 6. The CCM 3, which hosts an adaptive cruise control software package 3', is configured to publish a locked speed signal 8 on the PT-CAN bus 6. The ABS 5 is configured to publish a vehicle speed signal 9 on the PT-CAN bus 6.

An instrument panel cluster (IPC) ECU 10 and a head-up display (HUD) ECU 11 subscribe to the PT-CAN bus 6 so that the engine speed signal 7, the locked speed signal 8 and the vehicle speed signal 9 are supplied to each of the IPC and HUD ECUs 10, 11. The IPC and HUD ECUs 10, 11 are each equipped with a processor (not shown) and a network interface (not shown). The network interfaces of the IPC and HUD ECUs are configured to assign different priorities (or 'latencies') to the locked speed, engine speed and vehicle speed signals 7, 8, 9. The signal latencies also depend on the level of usage of the PT-CAN bus 6 and thus cannot be robustly predicted. It is only possible to reliably estimate a worst case scenario latency.

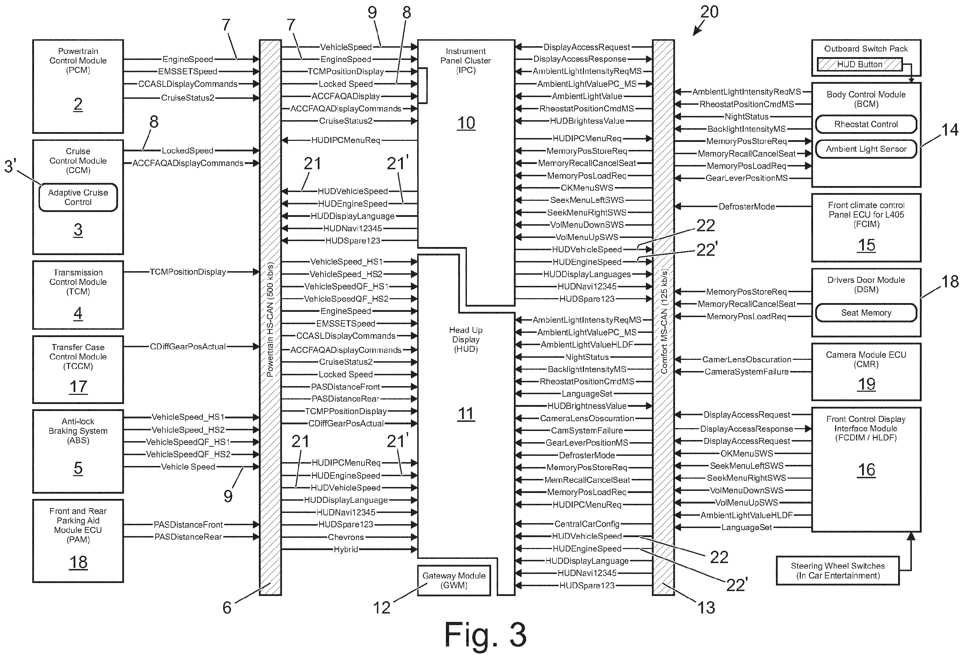

The IPC and HUD ECUs have separate processors. A first display is provided on the vehicle main instrument board (not shown) and is part of the IPC ECU. A second display is provided elsewhere on a position that can be seen by the driver while the driver looks at the road, and is part of the HUD ECU 11. The IPC ECU 10 and the HUD ECU 11 are thus configured within the subsystem such that each will independently process the locked speed, engine speed and vehicle speed signals 7, 8, 9 in order to produce corresponding independent displays of values related to said signals 7, 8, 9 on each of the first and second displays. Since the processors of the IPC and HUD ECUs are different, the displayed values on the primary and secondary screens may be different. This may result in a lack of confidence by the driver in the displayed values. If the processors were the same (or very similar) there would still be a risk that different sets of source data are processed and then outputted on the displays because each of the IPC and HUD ECUs 10, 11 independently subscribe to the PT-CAN bus 6 for data input. Due to potentially different message latencies, the display of the IPC ECU 10 could be displaying, for example, a value of vehicle speed calculated from source data measured by a sensor of the ABS module 5 at a time instant t-1, and the display of the HUD ECU 11 could be displaying a value of vehicle speed calculated from resampled source data, i.e. from data measured by the ABS sensor at a time instant t-2 greater than t-1. On the other hand, the subsystem illustrated in Figure 3 minimises or prevents the risk of inconsistent values being displayed at the same time on the IPC and HUD displays.

The vehicle driver information subsystem 1 of Figure 2 also comprises a further data transmission bus 13, which is a comfort medium speed controller area network (CO-CAN) bus 13. The CO-CAN 13 is configured to receive signals published on the network by a body control module (BCM) 14, a driver's door control module (DDM) 15, and a front control display interface module (FCDIM) 16. The subsystem 1 thus also comprises a gateway module (GWM) ECU 12 which is responsible for the distribution of signals between the different data transmission buses 6, 13. The functionalities of these modules are not described here in further detail as they are not immediately relevant to the invention.

### Driver information system

Figure 3 shows schematically a driver information system 20 which allows simultaneous display of selected vehicle operating parameters on two displays. This system 20 is according to an embodiment of the invention. Like reference numerals have been used to indicate features or components equivalent to features or components shown in Figure 2.

The subsystem 20 comprises: a powertrain control module (PCM) 2; a cruise control module (CCM) 3; a transmission control module (TCM) 4; an anti-lock braking system (ABS) 5; a transfer case control module (TCCM) 17; and a front and rear parking aid module (PAM) 18. The PCM 2, CCM 3, TCM 4; ABS 5; TCCM 17; and PAM 18 interface on a powertrain high speed controller area network (PT-CAN) bus 6. The PCM 2 is configured to publish an engine speed signal 7 on the PT-CAN bus 6. The CCM 3, which hosts an adaptive cruise control software package 3', is configured to publish a locked speed signal 8 on the PT-CAN bus 6.

An instrument panel cluster (IPC) ECU 10 and a head up display (HUD) ECU 11 subscribe to the PT-CAN bus 6. In this embodiment, the engine speed, locked speed and vehicle speed signals 7, 8, 9 are passed only to the IPC ECU 10. The IPC and HUD ECUs 10, 11 are each equipped with a respective processor (not shown) and a network interface (not shown). The network interfaces of the IPC and HUD ECUs are configured to assign different priorities (or 'latencies') to the engine speed, locked speed, and vehicle speed signals 7, 8, 9. It should be noted, however, that in this embodiment the IPC ECU 10 and the HUD ECU 11 do not subscribe to the same signals on the PT-CAN bus 6, and therefore the presence of different latencies in these signals will be irrelevant. In other words, the HUD ECU 11 is a complete slave of the IPC ECU 10. As a result, the displays will output matching results with just a small lag due to the master/salve relationship between the HUD ECU 11 and the IPC ECU 10.

A first display is provided on the vehicle instruments board (not shown) and is part of the IPC ECU 10. A second display (not shown) is located elsewhere in a position designed to be seen by the driver while the driver looks at the road, and is part of the HUD ECU 11. The IPC ECU 10 processes the engine speed, locked speed and vehicle speed signals 7, 8, 9. The corresponding processed signals generated by the IPC ECU 10 are: an HUD vehicle speed signal 21; an HUD engine speed signal 21'. The HUD vehicle and engine speed signals 21, 21' are published by the IPC ECU 10 on the PT-CAN bus 6. The HUD ECU 11 subscribes to the HUD vehicle and engine speed signals 21, 21' via the PT-CAN bus 6.

Accordingly, the primary and secondary displays will now output to the driver consistent values related to the engine speed, locked speed and vehicle speed signals 7, 8, 9 on each of the first and second displays. This is possible essentially for two reasons: first, the subsystem 20 is now configured to centrally process the relevant data at the IPC ECU 10; second, the latency of the to-be-displayed signals with respect to the HUD ECU subscription on the PT-CAN network bus 6 is negligible, whereby even at high levels of usage of the PT-CAN bus 6, the display of the HUD ECU will reliably receive the to-be-displayed data for substantially simultaneous output with the display of the IPC ECU. Any lag can be kept below a perception speed, for example below 50ms.

Consistent display of values on the IPC ECU's display on the one hand and on the HUD ECU's display on the other hand may affect driver confidence in the displayed information. There is no risk that different sets of source data be independently processed for output by each of the IPC and HUD ECUs 10, 11 since these ECUs do not independently subscribe, filter and process to the PT-CAN bus 6 for data input. This is in contrast with the network architecture illustrated in Figure 2.

A comfort medium speed CAN (CO-CAN) bus 13 is in addition configured to receive signals published on the network by a body control module (BCM) 14, a driver's door control module (DDM) 15, a front control display interface module (FCDIM) 16; a driver's seat module (DSM) 18, and a camera module (CMR) 19. The functionalities of these modules are not described herein in further detail since not immediately relevant to the invention. As for the subsystem shown in Figure 2, the subsystem 20 of Figure 3 also comprises a gateway module (GWM) ECU 12 which is responsible for the distribution of signals between the different data transmission buses 6, 13.

### Wade sensing system

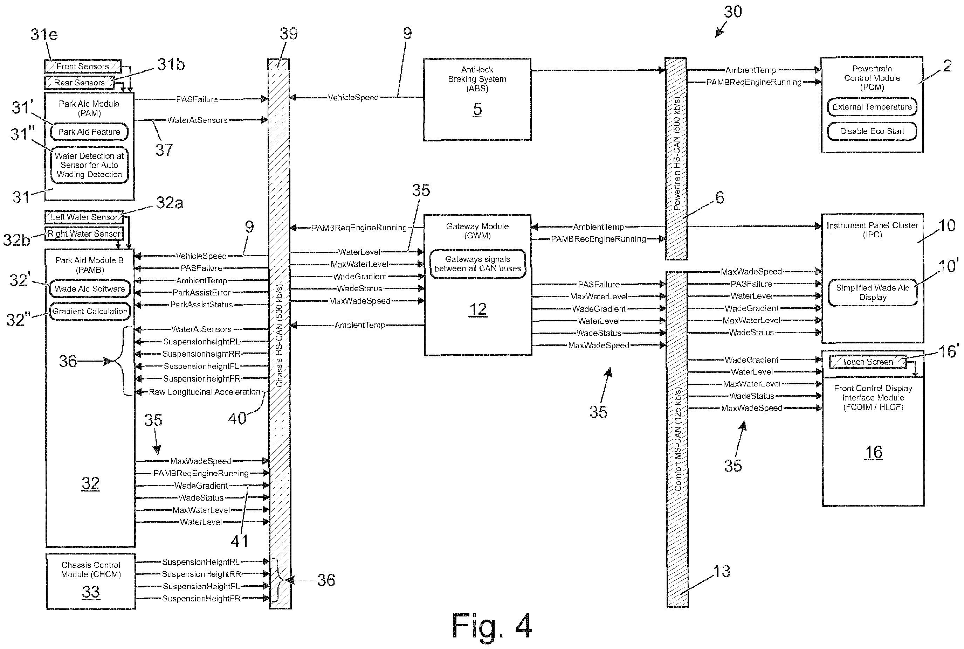

Figure 4 shows schematically the network architecture of a wade sensing system 30 according to an embodiment of the invention which allows simultaneous display to the driver of selected vehicle operating parameters on two displays in accordance with an embodiment of the invention. Like reference numerals have been used to indicate features or components equivalent to features or components shown in Figure 2 and/or 3.

The subsystem 30 comprises: a front and rear park aid module (PAM) 31; a left and right park aid module (PAMB) 32, a chassis control module (CHCM) 33 and an ABS module 5. The PAMB comprises left and right water level sensors 32a, 32b pointed downwards for detecting presence of water and/or for assessing water depth. The PAM comprises a park aid feature software package 31' and a water detection software package 31". The PAM 31 is configured to accept input from front and rear parking sensors 31a, 31b. The PAMB 32 comprises a wade sensing software package 32', a gradient calculation software package 32" and is configured to accept input from the left and right water level sensors 32a, 32b. The PAM 31, PAMB 32, CHCM 33 and ABS 5 are connected to a chassis high speed controller area network (CH-CAN) bus 39. The ABS 5 is configured to publish a vehicle speed signal 9 on the CH-CAN bus 39. The CHCM 33 is configured to publish a suspension height bundle of signals 36 on the CH-CAN bus 39. The PAM 31 is configured to publish a water detection signal 37 on the CH-CAN bus 39. The PAMB 32 is configured to subscribe to the vehicle speed signal 9 and to the suspension height bundle of signals 36 from the CH-CAN bus 39. The PAMB 32 is also configured to generate a set of wade processed data signals 35 and to publish the same on the CH-CAN bus 39.

The subsystem 30 also comprises a powertrain high speed CAN (PT-CAN) 6 and a comfort medium speed CAN (CO-CAN) 13. A gateway module (GWM) ECU 12 subscribes to the wade processed data signals 35 from the CH-CAN bus 39 and distributes them to the CO-CAN 13. The PT-CAN 6 accepts signals published by the PCM 2, ABS 5 and GWM ECU 12, and makes the same available to the PCM 2, the GWM ECU 12 and an instrument panel cluster (IPC) ECU 10. The IPC ECU 10 subscribes to the wade processed data signals 35 over the CO-CAN bus 13. The IPC ECU comprises a simplified wade sensing display 10'. The wade processed data signals 35 are displayed on the simplified display 10'. The subsystem 30 also comprises a front control display interface module (FCDIM) ECU 16. The FCDIM ECU 16 comprises a touch screen 16' for outputting information to the driver. The FDCIM ECU 16 subscribes to the wade processed data signals 35 over the CO-CAN bus 13. The wade processed data signals 35 are displayed also on the touch screen 16'. In this embodiment, the processed wade data signals 35 are generated only by a single ECU, the PAMB ECU 32 and then simultaneously displayed on the simplified wade sensing display 10' and on the touch screen 16' of the FDCIM ECU 16.

Even though the processors of the IPC and FDCIM ECUs 10, 16 are different, the displayed values on the simplified wade sensing display 10' and on the FDCIM ECU touch screen 16' are consistent. This may affect the driver confidence in the displayed values. There is no risk that different sets of source data be processed for output by each of the IPC and FDCIM ECUs 10, 16 as these ECUs are not required to perform data processing.

The PAMB ECU 32 subscribes to a Raw Longitudinal Acceleration signal 40 and publishes the result of a calculation based on said Raw Longitudinal Acceleration signal 40 as a Wade Gradient signal 41. The PAMB ECU 32 does not require the Wade Gradient signal 41 to perform its function, but the PAMB ECU 32 performs this calculation to maintain alignment of the two displays. The raw acceleration data 40 requires significant processing and filtering to robustly calculate a gradient. The PAMB ECU 32 does not require the gradient information for its own functionality but nevertheless hosts this calculation so that the multiple displays 10', 16' can show aligned information to the driver.

### Eco-driving system

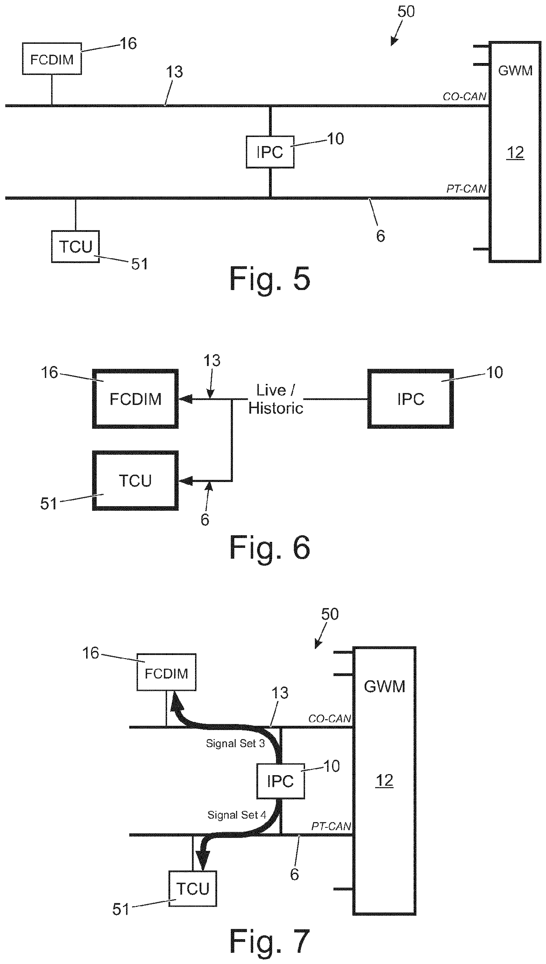

The network architecture of an eco-driving system 50 in accordance with an embodiment of the present invention will now be described, in simplified terms, in connection with Figures 5 to 7. Like reference numerals have been used to indicate features or components equivalent to features or components shown in Figure 2, 3 and/or 4.

Figure 5 shows an eco-driving system 50 comprising a gateway module (GWM) ECU 12, a comfort medium speed data transmission controller area network (CO-CAN) bus 13, a powertrain high speed data transmission controller area network (PT-CAN) bus 6, a FCDIM ECU 16, a telemetry control unit (TCU) ECU 51 and an IPC ECU 10.

The GMW ECU 12 is configured to distribute data between the CO-CAN bus 13 and the PT-CAN bus 6. The IPC ECU 10 subscribes to both the CO-CAN bus 13 and the PT-CAN bus 6. As shown in Figure 6, the CO-CAN bus 13 is used for data exchange between the IPC ECU 10 to the FCDIM ECU 16. PT-CAN bus 13 is used to exchange data between the IPC ECU 10 to the TCU ECU 51. The IPC ECU 10 represents in this arrangement the nominated ECU and is therefore configured to receive data relating to fuel consumption from the GWM ECU 12. These data are centrally processed by the IPC ECU 10. Figure 7 shows the flow of processed data from the IPC ECU 10 to each of the TCU ECU 51 and the FCDIM ECU 16 via, respectively, the CO-CAN bus 13 and the PT-CAN bus 6. The processed data are visualised by the display of the IPC ECU 10 and the touch screen display of the FCDIM ECU 16. The TCU ECU 51 comprises a global positioning system (GPS) box for transmitting the processed data to remote receivers such as smartphones. A mobile phone network (not shown) is used. It should also be noted that in the configuration of Figures 5 to 7, the IPC ECU 10 hosts a look-up table of historic data of fuel consumption which are therefore passed to both the TCU ECU 51 and the FCDIM ECU 16 together with the (live) processed data.

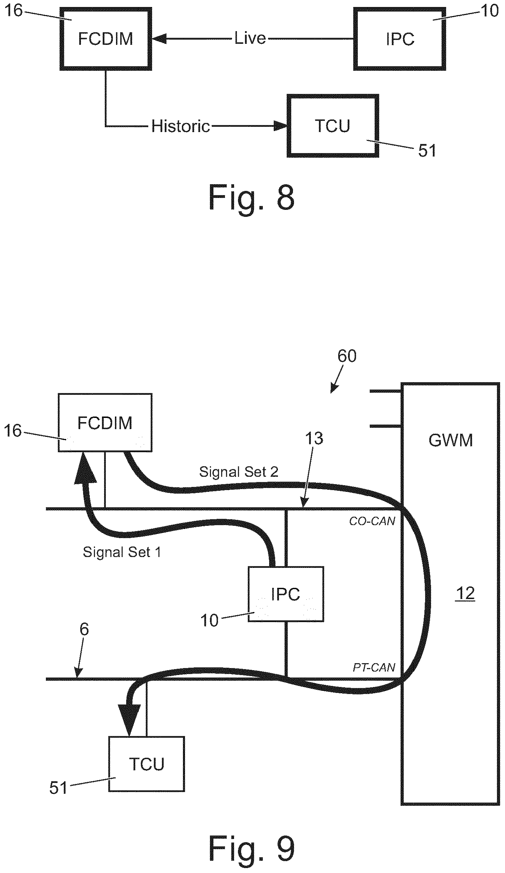

Figures 8 and 9 show an alternative system architecture 60 to that shown in Figures 5 to 7. The system architecture 60 is in accordance with an embodiment of the invention. This network architecture is not an embodiment of the invention, and is herein described purely to help the skilled person to appreciate the features of the invention by contrast. In Figures 8 and 9, the (live) processed data are sent from the IPC ECU 10 to the FCDIM ECU 16 which hosts the look-up table of the historic data. Combined historic and live processed data are then sent from the FDCIM ECU 16 to the TCU ECU 51 via the GWM ECU 12. Figure 9 shows the data flow graphically superimposed to the diagram shown in Figure 5. The GWM ECU 12 is responsible for transferring data from the CO-CAN bus 13 to the PT-CAN 6. The data displayed on the display of the IPC ECU 10 and on the touch screen of the FCDIM ECU 16 can potentially be different, but this is only because the latencies of the displays are not aligned. The displayed data are still centrally calculated by the IPC ECU 10.

### Lane departure warning system

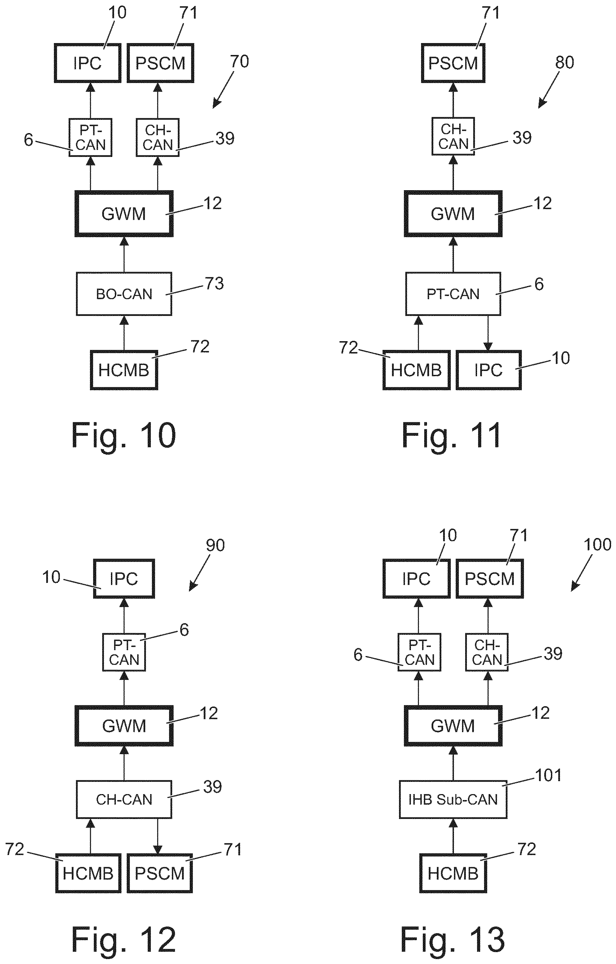

The network architecture of lane departure warning systems 70, 100 in accordance with embodiments of the present invention will now be described, in simplified terms, in connection with Figures 10 and 13. The network architectures represented in Figures 11 and 12 are not in accordance with the invention, and are herein described purely to help the skilled person to appreciate the features of the invention by contrast. Like reference numerals have been used to indicate features or components equivalent to features or components shown in Figure 2, 3, 4, and/or 5 to 9.

Figure 10 shows a lane departure warning system 70 comprising a vehicle camera (HCMB) ECU 72, a gateway module (GWM) ECU 12, an IPC ECU 10 and a power steering control module (PSCM) ECU 71. The vehicle headlamp camera module controls the height of the lights of the vehicle when an incoming vehicle is detected by a camera incorporated in the HCMB ECU 72. The HCMB ECU 72 and the GMW ECU 12 are in communication over a Body CAN (BO-CAN) bus 73. The HCMB ECU 72 is the nominated ECU, i.e. the ECU predisposed for central computation of to-be-displayed data. The GWM ECU 12 publishes the processed data on each of two data transmission buses, namely a PT-CAN 6 and a CH-CAN 39. The IPC ECU 10 subscribes to data from the PT-CAN 6, and the PSCM ECU 71 subscribes to data from the CH-CAN 39. Thus the HCMB ECU 72 collects raw data relating to relative positioning of the vehicle in a road lane, publishes them on the BO-CAN bus 73 for retrieval from the GWM ECU 12. The GWM ECU 12 publishes processed gateway data on the PT-CAN bus 6 and on the CH-CAN bus 39 for retrieval respectively from the IPC ECU 10 and the PSCM ECU 71 for output to the driver. The IPC ECU 10 outputs the processed data on a display in the form of a visual warning signal. Further, the IPC ECU 10 has the ability to cause a warning sound to be emitted simultaneously on a speaker (not shown) which is also part of the IPC ECU 10. The PSCM ECU 71 comprises a device for generating vibration on the steering wheel of the vehicle and is thus configured to output the processed data in the form of a haptic feedback signal.

Figure 11 shows a lane departure warning system 80 according to an embodiment of the invention comprising a vehicle camera (HCMB) ECU 72, a gateway module (GWM) ECU 12, an IPC ECU 10 and a power steering control module (PSCM) ECU 71. The HCMB ECU 72 and the GMW ECU 12 are in communication over a PT-CAN bus 6. The ECU entrusted with processing the data is the HCMB ECU 72. Therefore, a single, nominated processing ECU is defined over this system architecture. The GWM ECU 12 publishes the data processed by the HCMB ECU 72 data to a CH-CAN bus 39. The IPC ECU 10 subscribes to data from the PT-CAN bus 6, and the PSCM ECU 71 subscribes to data from the CH-CAN bus 39. Thus the HCMB ECU 72 collects raw data relating to relative positioning of the vehicle and a road lane, publishes them on the PT-CAN bus 6 for retrieval from the GWM ECU 12. The GWM ECU 12 publishes processed data on the CH-CAN bus 39 for retrieval from the PSCM ECU 71 for output to the driver. The IPC ECU 10 outputs the processed data on a display in the form of a visual warning signal. The PSCM ECU 71 comprises a device for generating vibration on the steering wheel of the vehicle and is thus configured to output the processed data in the form of a haptic feedback signal. Figure 11 shows a system 80 having latency differences between visual and haptic warnings. In this respect, the system 80 is similar to the system 90 of Figure 12. Figure 10 and 13 do not have such latency differences due to the different distribution and strategy of ECUs onto the network. All solutions however prescribe the definition of a nominated ECU for performing the required calculations.

Figure 12 shows a lane departure warning system 90 according to an embodiment of the invention comprising a vehicle camera (HCMB) ECU 72 a gateway module (GWM) ECU 12, an IPC ECU 10 and a power steering control module (PSCM) ECU 71. The HCMB ECU 72 and the GMW ECU 12 are in communication over a CH-CAN bus 39. The ECUs entrusted with processing the data is the HCMB ECU 72. Therefore a single, nominated processing ECU is defined over this system architecture. The GWM ECU 12 publishes the processed data to a PT-CAN bus 6. The IPC ECU 10 subscribes to data from the PT-CAN bus 6, and the PSCM ECU 71 subscribes to data from the CH-CAN bus 39. Thus the HCMB ECU 72 collects raw data relating to relative positioning of the vehicle and a road lane, publishes them on the CH-CAN bus 39 for retrieval from the GWM ECU 12. The GWM ECU 12 publishes processed data on the PT-CAN bus 6 for retrieval from the IPC ECU 10 for output to the driver. The IPC ECU 10 outputs the processed data on a display in the form of a visual warning signal. The PSCM ECU 71 comprises a device for generating vibration on the steering wheel of the vehicle and is thus configured to output the processed data in the form of a haptic feedback signal. The arrangement shown in Figure 12 is very similar to that shown in Figure 11, except for the fact that the relative positions in the network architecture of the PT-CAN bus 6 and of the CH-CAN bus 39 are inverted.

Figure 13 shows a lane departure warning system 100 according to an embodiment of the invention comprising a vehicle camera (HCMB) ECU 72, a gateway module (GWM) ECU 12, an IPC ECU 10 and a power steering control module (PSCM) ECU 71. The HCMB ECU 72 and the GMW ECU 12 are in communication over an Intelligent High Beam (IHB) Sub-CAN bus 101. The GWM ECU 12 is the nominated ECU, i.e. the ECU predisposed for central computation of to-be-displayed data. The GWM ECU 12 publishes the processed data on each of two data transmission buses, namely a PT-CAN 6 and a CH-CAN 39. The IPC ECU 10 subscribes to data from the PT-CAN 6, and the PSCM ECU 71 subscribes to data from the CH-CAN 39. Thus the HCMB ECU 72 collects raw data relating to relative positioning of the vehicle and a road lane, publishes them on the IHB Sub-CAN bus 101 for retrieval from the GWM ECU 12. The GWM ECU 12 publishes processed data on the PT-CAN bus 6 and on the CH-CAN bus 39 for retrieval respectively from the IPC ECU 10 and the PSCM ECU 71 for output to the driver. The IPC ECU 10 outputs the processed data on a display in the form of a visual warning signal. The PSCM ECU comprises a device for generating vibration on the steering wheel of the vehicle and is thus configured to output the processed data in the form of a haptic feedback signal.

In each of the network architectures shown in Figures 10 and 13, the driver experiences consistency between the warning signals generated on the one hand by the display of the IPC ECU 10 and on the other hand by the vibration device of the PSCM ECU 71, i.e. the warning signals are generated without appreciable delay between each other.

## Claims

1. A vehicle distributed network subsystem for providing feedback to a user, the subsystem comprising:
a plurality of electronic control units (ECUs); and
a data transmission means over which said ECUs are configured to communicate with one another, the data transmission means being configured to receive data relating to at least one parameter from at least one data source;
wherein the subsystem is configured to define a nominated ECU for generating processed data from the data received by said data transmission means, and
wherein the subsystem is configured to broadcast and deliver said processed data to two or more terminals for providing feedback to the user, to cause communication of the same parameter to the user by the different terminals.

2. A vehicle distributed network subsystem according to claim 1, wherein the data transmission means is configured to receive data relating to a value of said at least one parameter, and the subsystem is configured to cause communication of the same value of said same parameter to the user by the different terminals.

3. A vehicle distributed network subsystem according to claim 1 or 2, comprising two or more terminals configured to communicate with said ECUs.

4. A vehicle distributed network subsystem according to claim 3, wherein the subsystem is configured to deliver said processed data to each of said terminals for substantially simultaneous output to the user.

5. A vehicle distributed network subsystem according to claim 4, wherein each of the two or more terminals is programmed to associate a data latency to the processed data, wherein each of said data latencies is below a predetermined value.

6. A vehicle distributed network subsystem according to any one of claims 3 to 5, wherein each of said terminals is part of a respective user interface ECU.

7. A vehicle distributed network subsystem according to claim 6, wherein a first of said user interface ECUs is configured to subscribe to a second of said user interface ECUs, or a first and a second of said user interface ECUs are configured to subscribe to the nominated ECU.

8. A vehicle driver information system (1; 20) comprising a vehicle distributed network subsystem according to any one of claims 3 to 7, wherein the data transmission means is configured to receive data from at least one of the following :
a powertrain control module (PCM) ECU (2);
a cruise control module (CCM) ECU (3);
a transmission control module (TCM) ECU (4);
a transfer case control module (TCCM) ECU (17);
an antilock braking system module (ABS) ECU (5); or
a parking aid module (PAM) ECU (18),
wherein an instrument panel cluster (IPC) ECU (10) is configured to function as the nominated ECU, and
wherein each of the terminals is a display,
optionally the data transmission means is configured to receive data relating to vehicle or engine speed, the nominated ECU is configured to generate processed data relating to vehicle or engine speed, and the displays are each configured to visualise said processed data.

9. A vehicle wade sensing system (30) comprising a vehicle distributed network subsystem according to any one of claims 3 to 7, comprising a plurality of data transmission means and a gateway module (GWM) ECU (12) for distributing data between the data transmission means, wherein at least one of said data transmission means is configured to receive data from at least one of the following:
an anti-lock braking system (ABS) ECU (5);
a parking aid module (PAMB) ECU (32);
a forward or rearward park assist sensor (31a, 31b);
a water presence sensor;
a water depth sensor; or
a chassis control module (CHCM) (33),
wherein the PAMB ECU is configured to function as the nominated ECU, and
wherein each of the terminals is a display,
optionally at least one of the data transmission means is configured to receive data relating to a level of water surrounding the vehicle, the nominated ECU is configured to generate processed data relating to said level of water, and the displays are each configured to visualise said processed data.

10. A vehicle eco-driving system (50) comprising a vehicle distributed network subsystem according to any one of claims 3 to 7, comprising a plurality of data transmission means and a gateway module (GWM) ECU (12) for distributing data between the data transmission means,
wherein at least one of said data transmission means is configured to receive data relating to fuel consumption,
wherein an instrument panel cluster (IPC) ECU (10) is configured to function as the nominated ECU, and
wherein each of the terminals is a display,
optionally the nominated ECU is configured to generate processed data relating to fuel consumption, and the displays are each configured to visualise a signal for encouraging eco-driving based on said processed data.

11. A vehicle lane departure warning system (70; 80; 90; 100) comprising a vehicle distributed network subsystem according to any one of claims 3 to 7, comprising a plurality of data transmission means and a gateway module (GWM) ECU (12) for distributing data between the data transmission means,
wherein at least one of said means is configured to receive data relating to relative positioning of the vehicle in a lane,
wherein a vehicle camera module ECU (72) is configured to function as the nominated ECU, and
wherein at least one of the terminals is a display,
optionally said at least one of said data transmission means is configured to receive data from a vehicle camera.

12. A vehicle distributed network comprising a vehicle distributed network subsystem according to any one of claims 1 to 7, and/or a vehicle driver information system (1; 20) according to claim 8, and/or a vehicle wade sensing system (30) according to claim 9, and/or a vehicle eco driving system (50) according claim 10, and/or a vehicle lane departure warning system (70; 80; 90; 100) according to claim 11.

13. A vehicle comprising a vehicle distributed network according to claim 12.

14. A method of providing feedback to a user of a vehicle on a plurality of terminals connected to a vehicle distributed network, the method comprising:
supplying data relating to at least one parameter to a data transmission means connected to a plurality of electronic control units (ECUs), wherein the plurality of electronic control units are configured to communicate with one another via the data transmission means;
processing said data by means of a nominated ECU in order to generate a set of processed data; and
broadcasting and delivering the processed data to two or more of said terminals for output to the user, to cause communication of the same parameter to the user by the different terminals.

15. A distributed computer program product for configuring or reconfiguring a vehicle distributed network, the computer program product comprising a computer readable storage medium including computer readable program code, wherein the computer readable program code when executed on a vehicle system comprising a vehicle distributed network configures the vehicle distributed network for performing a method according to claim 14.

## Patentansprüche

1. Fahrzeugverteiltes Netzwerkteilsystem zum Bereitstellen von einer Rückmeldung für einen Benutzer, wobei das Teilsystem Folgendes umfasst:
mehrere elektronische Steuereinheiten (*electronic control units* - ECUs); und
ein Datenübertragungsmittel, über das die ECUs konfiguriert sind, um miteinander zu kommunizieren, wobei das Datenübertragungsmittel konfiguriert ist, um Daten zu empfangen, die sich auf wenigstens einen Parameter von wenigstens einer Datenquelle beziehen;
wobei das Teilsystem konfiguriert ist, um eine nominierte ECU zum Erzeugen verarbeiteter Daten aus den durch das Datenübertragungsmittel empfangenen Daten zu definieren, und wobei das Teilsystem konfiguriert ist, um die verarbeiteten Daten zu senden und an zwei oder mehr Endgeräte auszusenden, um dem Benutzer eine Rückmeldung zu geben, um eine Kommunikation des gleichen Parameters an den Benutzer durch die verschiedenen Endgeräte zu bewirken.

2. Fahrzeugverteiltes Netzwerkteilsystem nach Anspruch 1, wobei das Datenübertragungsmittel konfiguriert ist, um Daten zu empfangen, die sich auf einen Wert des wenigstens einen Parameters beziehen, und das Teilsystem konfiguriert ist, um eine Kommunikation des gleichen Werts des gleichen Parameters an den Benutzer durch die verschiedenen Endgeräte zu bewirken.

3. Fahrzeugverteiltes Netzwerkteilsystem nach Anspruch 1 oder 2, umfassend zwei oder mehr Endgeräte, die konfiguriert sind, um mit den ECUs zu kommunizieren.

4. Fahrzeugverteiltes Netzwerkteilsystem nach Anspruch 3, wobei das Teilsystem konfiguriert ist, um die verarbeiteten Daten an jedes aus den Endgeräten für eine im Wesentlichen gleichzeitige Ausgabe an den Benutzer zu liefern.

5. Fahrzeugverteiltes Netzwerkteilsystem nach Anspruch 4, wobei jedes der zwei oder mehr Endgeräten programmiert ist, um den verarbeiteten Daten eine Datenlatenz zuzuordnen, wobei jede der Datenlatenzen unter einem zuvor bestimmten Wert liegt.

6. Fahrzeugverteiltes Netzwerkteilsystem nach einem der Ansprüche 3 bis 5, wobei jedes der Endgeräte ein Teil einer entsprechenden Benutzeroberflächen-ECU ist.

7. Fahrzeugverteiltes Netzwerkteilsystem nach Anspruch 6, wobei eine erste der Benutzeroberflächen-ECUs konfiguriert ist, um eine zweite der Benutzeroberflächen-ECUs zu abonnieren, oder eine erste und eine zweite der Benutzeroberflächen-ECUs konfiguriert sind, um die nominierte ECU zu abonnieren.

8. Fahrzeugfahrerinformationssystem (1; 20) umfassend ein fahrzeugverteiltes Netzwerkteilsystem nach einem der Ansprüche 3 bis 7, wobei das Datenübertragungsmittel konfiguriert ist, um Daten von Folgenden zu empfangen:
ein *Motorsteuermodul*(*powertrain control module-* PCM)-ECU (2);
ein Fahrgeschwindigkeitssteuermodul(*cruise control module* - CCM)-ECU (3);
ein Getriebesteuermodul(*transmission control module* - TCM)-ECU (4);
ein Verteilergetriebesteuermodul(*transfer case control module* - TCCM)-ECU (17);
ein Antiblockiersystemmodul(*antilock braking system module* - ABS)-ECU (5); und/oder
ein Einparkhilfemodul(PAM)-ECU (18), wobei ein Armaturenbrettcluster(*instrument panel cluster-* IPC)-ECU (10) konfiguriert ist, um als das nominierte ECU zu fungieren, und wobei jedes der Endgeräte eine Anzeige ist, optional das Datenübertragungsmittel konfiguriert ist, um Daten bezüglich der Fahrzeug- oder Motordrehzahl zu empfangen, die nominierte ECU konfiguriert ist, um verarbeitete Daten bezüglich der Fahrzeug- oder Motordrehzahl zu erzeugen, und die Anzeigen jeweils konfiguriert sind, um die verarbeiteten Daten zu veranschaulichen.

9. Wegerfassungssystem für Fahrzeuge (30), umfassend ein fahrzeugverteiltes Netzwerkteilsystem nach einem der Ansprüche 3 bis 7, das mehrere Datenübertragungsmittel und ein Gatewaymodul(*gateway module-* GWM)-ECU (12) zum Verteilen von Daten zwischen den Datenübertragungsmitteln umfasst, wobei wenigstens eines der Datenübertragungsmittel konfiguriert ist, um Daten von Folgenden zu empfangen:
ein Antiblockiersystem(*anti-lock baking system* - ABS)-ECU (5);
ein Einparkhilfemodul(*parking aid module* - PAMB)-ECU (32);
einen Vorwärts- oder Rückwärtsparkassistenzsensor (31a, 31b);
ein Wasserstandsensor;
ein Wassertiefensensor; oder
ein Fahrgestellsteuermodul (*chassis control module -* CHCM) (33), wobei die PAMB-ECU konfiguriert ist, um als die nominierte ECU zu fungieren, und wobei jedes der Endgeräten eine Anzeige ist, optional wenigstens eine der Datenübertragungsmittel konfiguriert sind, um Daten zu empfangen, die sich auf einen das Fahrzeug umgebenden Wasserstand beziehen, die nominierte ECU konfiguriert ist, um verarbeitete Daten zu erzeugen, die sich auf den Wasserstand beziehen, und die Anzeigen jeweils konfiguriert sind, um die verarbeiteten Daten zu veranschaulichen.

10. Ökologisches Fahrzeugfahrsystem (50) umfassend ein fahrzeugverteiltes Netzwerkteilsystem nach einem der Ansprüche 3 bis 7, die mehrere Datenübertragungsmittel und ein Gatewaymodul(GWM)-ECU (12) zum Verteilen von Daten zwischen Datenübertragungsmitteln umfasst, wobei wenigstens eines der Datenübertragungsmittel konfiguriert ist, um Daten zu empfangen, die sich auf den Brennstoffverbrauch beziehen, wobei eine Armaturenbrettcluster-ECU (10) konfiguriert ist, um als die nominierte ECU zu fungieren, und wobei jedes der Endgeräte eine Anzeige ist, wobei optional die nominierte ECU konfiguriert ist, um verarbeitete Daten zu erzeugen, die sich auf den Brennstoffverbrauch beziehen, und die Anzeigen jeweils konfiguriert sind, um ein Signal für eine Förderung des umweltfreundlichen Fahrens basierend auf den verarbeiteten Daten zu veranschaulichen.

11. Spurverlassenswarnsystem für Fahrzeuge (70; 80; 90; 100), umfassend ein fahrzeugverteiltes Netzwerkteilsystem nach einem der Ansprüche 3 bis 7, das mehrere Datenübertragungsmittel und ein Gatewaymodul(GWM)-ECU (12) zum Verteilen von Daten zwischen den Datenübertragungsmitteln umfasst, wobei wenigstens eines der Mittel konfiguriert ist, um Daten zu empfangen, die sich auf die relative Positionierung des Fahrzeugs in einer Spur beziehen, wobei eine Fahrzeugkameramodul-ECU (72) konfiguriert ist, um als nominiert ECU zu fungieren, und wobei wenigstens einer der Endgeräte eine Anzeige ist, wobei optional wenigstens eines der Datenübertragungsmittel konfiguriert, um Daten von einer Fahrzeugkamera zu empfangen.

12. Fahrzeugverteiltes Netzwerk, das ein fahrzeugverteiltes Netzwerkteilsystem nach einem der Ansprüche 1 bis 7, und/oder ein Fahrzeugfahrerinformationssystem (1; 20), nach Anspruch 8, und/oder ein Wegerfassungssystem für Fahrzeuge (30) nach Anspruch 9 und/oder ein Ökologisches Fahrzeugfahrsystem (50) nach Anspruch 10 und/oder ein Spurverlassenswarnsystem für Fahrzeuge (70; 80; 90; 100) nach Anspruch 11 umfasst.

13. Fahrzeug, umfassend ein fahrzeugverteiltes Netzwerk nach Anspruch 12.

14. Verfahren zum Bereitstellen einer Rückmeldung an einen Benutzer eines Fahrzeugs auf mehreren Endgeräten, die mit einem fahrzeugverteilten Netzwerk verbunden sind, wobei das Verfahren Folgendes umfasst:
Zuführen von Daten, die sich auf wenigstens einen Parameter beziehen, an ein Datenübertragungsmittel, das mit mehreren elektronischen Steuereinheiten (ECUs) verbunden ist, wobei die mehreren elektronischen Steuereinheiten konfiguriert sind, um über die Datenübertragungseinrichtung miteinander zu kommunizieren;
Verarbeiten dieser Daten mittels einer nominierten ECU, um einen Satz verarbeiteter Daten zu erzeugen; und
Aussenden und Liefern der verarbeiteten Daten an zwei oder mehr der Endgeräte für die Ausgabe an den Benutzer, um die Kommunikation des gleichen Parameters mit dem Benutzer durch die verschiedenen Endgeräte zu bewirken.

15. Verteiltes Computerprogrammprodukt zum Konfigurieren oder Umkonfigurieren eines fahrzeugverteilten Netzwerks, wobei das Computerprogrammprodukt ein computerlesbares Speichermedium umfasst, das einen computerlesbaren Programmcode beinhaltet, wobei der computerlesbare Programmcode, wenn er auf einem Fahrzeugsystem ausgeführt wird, das ein fahrzeugverteiltes Netzwerk umfasst, das fahrzeugverteilte Netzwerk zum Durchführen eines Verfahrens nach Anspruch 14 konfiguriert.

## Revendications

1. Sous-système de réseau distribué pour véhicule permettant de fournir une rétroaction à un utilisateur, le sous-système comprenant :
une pluralité d'unités de commande électronique (ECU) ; et
un moyen de transmission de données sur lequel lesdites ECU sont configurées pour communiquer entre elles, le moyen de transmission de données étant configuré pour recevoir des données concernant au moins un paramètre en provenance d'au moins une source de données ;
dans lequel le sous-système est configuré pour définir une ECU désignée pour générer des données traitées à partir des données reçues par ledit moyen de transmission de données, et
dans lequel le sous-système est configuré pour diffuser et acheminer lesdites données traitées à au moins deux terminaux pour fournir une rétroaction à l'utilisateur, afin d'entraîner une communication du même paramètre à l'utilisateur par les différents terminaux.

2. Sous-système de réseau distribué pour véhicule selon la revendication 1, dans lequel le moyen de transmission de données est configuré pour recevoir des données concernant une valeur dudit au moins un paramètre, et le sous-système est configuré pour entraîner la communication de la même valeur dudit même paramètre à l'utilisateur par les différents terminaux.

3. Sous-système de réseau distribué pour véhicule selon la revendication 1 ou 2, comprenant au moins deux terminaux configurés pour communiquer avec lesdites ECU.

4. Sous-système de réseau distribué pour véhicule selon la revendication 3, dans lequel le sous-système est configuré pour livrer lesdites données traitées à chacun desdits terminaux pour une transmission sensiblement simultanée à l'utilisateur.

5. Sous-système de réseau distribué pour véhicule selon la revendication 4, dans lequel chacun des au moins deux terminaux est programmé pour associer une latence de données aux données traitées, dans lequel chacune desdites latences de données est inférieure à une valeur prédéterminée.

6. Sous-système de réseau distribué pour véhicule selon l'une quelconque des revendications 3 à 5, dans lequel chacun desdits terminaux fait partie d'une ECU d'interface utilisateur respective.

7. Sous-système de réseau distribué pour véhicule selon la revendication 6, dans lequel une première desdites ECU d'interface utilisateur est configurée pour s'abonner à une seconde desdites ECU d'interface utilisateur, ou une première et une seconde desdites ECU d'interface utilisateur sont configurées pour s'abonner à l'ECU désignée.

8. Système d'information pour conducteur de véhicule (1 ; 20) comprenant un sous-système de réseau distribué pour véhicule selon l'une quelconque des revendications 3 à 7, dans lequel le moyen de transmission de données est configuré pour recevoir des données en provenance :
d'une ECU de module de commande de groupe motopropulseur (PCM) (2) ; et/ou
d'une ECU de module de régulateur de vitesse (CCM) (3) ; et/ou
d'une ECU de module de commande de transmission (TCM) ECU (4) ; et/ou
d'une ECU de module de commande de boîte de transfert (TCCM) (17) ; et/ou
d'une ECU de module de système d'antiblocage des roues (ABS) (5) ; et/ou
d'une ECU de module d'aide au stationnement (PAM) (18),
dans lequel une ECU de tableau de bord (IPC) (10) est configurée pour fonctionner comme ECU désignée, et
dans lequel chacun des terminaux est un dispositif d'affichage,
éventuellement, le moyen de transmission de données est configuré pour recevoir des données concernant la vitesse du véhicule ou du moteur, l'ECU désignée est configurée pour générer des données traitées concernant la vitesse du véhicule ou du moteur, et les dispositifs d'affichage sont chacun configurés pour visualiser lesdites données traitées.

9. Système de détection de passage à gué pour véhicule (30) comprenant un sous-système de réseau distribué pour véhicule selon l'une quelconque des revendications 3 à 7, comprenant une pluralité de moyens de transmission de données et une ECU de module de passerelle (GWM) (12) servant à distribuer des données entre les moyens de transmission de données, au moins l'un desdits moyens de transmission de données étant configuré pour recevoir des données en provenance :
d'une ECU de système d'antiblocage des roues (ABS) (5) ; et/ou
d'une ECU de module d'aide au stationnement (PAM) (32) ; et/ou
d'un capteur d'aide au stationnement avant ou arrière (31a, 31b) ; et/ou
d'un capteur de présence d'eau ; et/ou
d'un capteur de profondeur d'eau ; et/ou
d'un module de commande de châssis (CHCM) (33),
dans lequel l'ECU de PAMB est configurée pour fonctionner comme ECU désignée, et
dans lequel chacun des terminaux est un dispositif d'affichage,
éventuellement, au moins l'un des moyens de transmission de données est configuré pour recevoir des données concernant un niveau d'eau entourant le véhicule, l'ECU désignée est configurée pour générer des données traitées econcernant ledit niveau d'eau, et les dispositifs d'affichage sont chacun configurés pour visualiser lesdites données traitées.

10. Système d'éco-conduite pour véhicule (50) comprenant un sous-système de réseau distribué pour véhicule selon l'une quelconque des revendications 3 à 7, comprenant une pluralité de moyens de transmission de données et une ECU de module de passerelle (GWM) (12) servant à distribuer des données entre les moyens de transmission de données,
dans lequel au moins l'un desdits moyens de transmission de données est configuré pour recevoir des données concernant la consommation de carburant,
dans lequel une ECU de tableau de bord (IPC) (10) est configurée pour fonctionner comme ECU désignée, et
dans lequel chacun des terminaux est un dispositif d'affichage,
éventuellement, l'ECU désignée est configurée pour générer des données traitées concernant la consommation de carburant, et les dispositifs d'affichages sont chacun configurés pour visualiser un signal destiné à encourager l'éco-conduite en fonction desdites données traitées.

11. Système d'avertissement de sortie de voie pour véhicule (70 ; 80 ; 90 ; 100) comprenant un sous-système de réseau distribué pour véhicule selon l'une quelconque des revendications 3 à 7, comprenant une pluralité de moyens de transmission de données et une ECU de module de passerelle (GWM) (12) servant à distribuer des données entre les moyens de transmission de données,
dans lequel au moins l'un desdits moyens est configuré pour recevoir des données concernant le positionnement relatif du véhicule dans une voie,
dans lequel une ECU de module de caméra de véhicule (72) est configurée pour fonctionner comme ECU désignée, et
dans lequel au moins l'un des terminaux est un dispositif d'affichage,
éventuellement, ledit au moins un desdits moyens de transmission de données est configuré pour recevoir des données en provenance d'une caméra de véhicule.

12. Réseau distribué pour véhicule comprenant un sous-système de réseau distribué pour véhicule selon l'une quelconque des revendications 1 à 7, et/ou un système d'information pour conducteur de véhicule (1 ; 20) selon la revendication 8, et/ou un système de détection de passage de gué pour véhicule (30) selon la revendication 9, et/ou un système d'éco-conduite pour véhicule (50) selon la revendication 10, et/ou un système d'avertissement de sortie de voie pour véhicule (70 ; 80 ; 90 ; 100) selon la revendication 11.

13. Véhicule comprenant un réseau distribué pour véhicule selon la revendication 12.

14. Procédé de fourniture d'une rétroaction à un utilisateur d'un véhicule sur une pluralité de terminaux connectés à un réseau distribué pour véhicule, le procédé comprenant :
la fourniture de données concernant au moins un paramètre à un moyen de transmission de données connecté à une pluralité d'unités de commande électronique (ECU), la pluralité d'unités de commande électronique étant configurées pour communiquer entre elles par l'intermédiaire du moyen de transmission de données ;
le traitement desdites données au moyen d'une ECU désignée afin de générer un ensemble de données traitées ; et
la diffusion et l'acheminement des données traitées à au moins deux desdits terminaux pour les transmettre à l'utilisateur, afin d'entraîner une communication du même paramètre à l'utilisateur par les différents terminaux.

15. Produit programme informatique distribué permettant configurer ou reconfigurer un réseau distribué pour véhicule, le produit programme informatique comprenant un support de stockage lisible par ordinateur comportant un code de programme lisible par ordinateur, dans lequel le code de programme lisible par ordinateur, lorsqu'il est exécuté sur un système pour véhicule comprenant un réseau distribué pour véhicule, configure le réseau distribué pour véhicule pour mettre en œuvre un procédé selon la revendication 14.
